# EUROPEAN PATENT APPLICATION

(11) **EP 1 253 113 A1**
(43) Date of publication of application: **30.10.2002**
(21) Application number: 00985909.1
(22) Date of filing: 26.12.2000
(51) Int. Cl.: C01G 49/12

(54) **NOVEL AQUEOUS COMPOSITION AND USE OF THE SAME**

(30) Priority: 26.12.1999 JP 37707799
(71) Applicant: Institute for State Physics of Natural Materials, Tsukuba-gun, Ibaraki 300-2436 (JP)
(72) Inventor: YAMASHITA, Shoji, Tsukuba-gun, Ibaraki 300-2436 (JP); ANDO, Mamoru, Tsukuba-gun, Ibaraki 300-2436 (JP)
(74) Representative: VOSSIUS & PARTNER
(86) International application number: JP0009266
(87) International publication number: WO01047815

(57) **Abstract**

The present invention relates to aqueous composition comprising of a single compound of a ferrosoferric salt as an active ingredient.

## Description

### TECHNICAL FEILD

The present invention relates to aqueous composition comprising an iron salt including a single compound of a ferrous and ferric salt and the use thereof.

### BACKGROUND ART

A ferrous and ferric salt of the general formula (A):

Fe(II)ₘ Fe(III)ₙ Y^{-Z} _{(2m+3n)/Z}

(wherein each of m and n is a positive integer, Y is a counter anion for a ferrous and a ferric cation and Z is an ionic value of Y) is a known compound mentioned in Japanese Patent Publication of 362023/1992. The publication also presents its use of innoxiousity of inorganic chromium VI using deoxability due to the compound (See the first paragraph of Japanese Patent Publication of 362023/1992.

Japanese Patent Publication of 190226/1984 also presents a ferrous and ferric salt carrying sodium chloride (See page 2 line 13 of the left column), and the ferrous and ferric salt is known to having an antitrust ability in Example 1, an ability of elimination of salt hindrance for plants in Example 2, an ability of improvement of soil having obstacles by planting with the same crop continuously in Example 3, an ability of restorage for a tissue of a living body in Example 4, an ability of revival of a tissue of plants in Example 5, an ability of inorganic synthesis of components of a living body in Example 6, an ability of aseptic and prevention of mold in Example 7, an anti-virus ability in Example 8 and an anti-tumor ability in Example 9 in the specification.

The density of a ferrosoferric salt of aqueous composition disclosed in Japanese Patent Publication of 190226/1984 is however limited such as 2.5x10⁻³g/ml in Ex. 1, 10⁻¹³g/ml in Ex. 2, 10⁻¹²g/ml in Ex. 3, 10⁻⁶/ml in Ex. 4, 10⁻⁷g/ml in Ex. 5 and 10⁻⁶ g/ml in Examples 6-9, and the activity of the aqueous composition depends on the density of the ferrosoferric salt according to the usage of the composition in any example. The known aqueous composition has very much complicated problems such as the preparation of the composition to adjust the density of ferrosoferric salt component suitably and the use of the composition in suitable density of a ferrosoferric salt. Therefore aqueous composition independent on the density of a ferrosoferric salt as well as effective on various usage.

The present inventors have made extensive researches with an aim to provide novel aqueous composition comprising a ferrosoferric salt which is independent on the density of a ferrosoferric salt as well as effective on the various usage. As a result, they have found that aqueous composition comprising a ferrosoferric salt of the general formula (A):

Fe(II)ₘ Fe(III)ₙ Y^{-Z} _{(2m+3n)/Z}

(wherein each of m and n is a positive integer, Y is a counter anion for a ferrous and a ferric cation and Z is an ionic value of Y) is effective as a rust preventive agent for metals, an elimination agent for salt hindrance, an improvement agent for soil having obstacles by the continuous crop, a storage agent for a tissue of a bioorganisms, a restored agent for a plant tissue, a non-biologically synthetic agent for a bioorganisms component, an antiseptic agent of plants, an anti-mold agent, an anti-virus agent and an anti-tumour agent which are independent on the density of a ferrosoferric salt in the aqueous solition.
The aqueous composition on the present invention is different from that of Japanese patent publication of 190226/1984 in dependency of a ferrosoferric salt.

### DESCLOSURE OF THE INVENTION

The present invention relates to aqueous composition comprising a ferrosoferric salt of a general formula (A):

Fe(II)ₘ Fe(III)ₙ Y^{-Z} _{(2m+3n)/Z}

(wherein each of m and n is a positive integer, Y is a counter anion for a ferrous and a ferric cation and Z is an ionic value of Y) and the use as a rust preventive agent for metals. The aqueous composition is prepared to dissolve a ferrosoferric salt of a general formula (A):

Fe(II)ₘ Fe(III)ₙ Y^{-Z} _{(2m+3n)/Z}

(wherein each of m and n is a positive integer, Y is a counter anion for a ferrous and a ferric cation and Z is an ionic value of Y) and further to dilute the solution suitably with water.

Distilled water, hard water and soft water are examplifed as the water to be used. Distilled water is more preferable to maintain the property of the aqueous composition stable although any aqueous solution is to use to prepare the composition.

The pH value of the aqueous composition is not limitited as long as the ferrosoferric salt of the solution is converted to the insoluble iron salt such as Fe(OH)₂ and is from 3.0 to 9.0, preferably from 5.0 to 7.5, more preferably 5.5 to 6.0.

Now, the preparation of the aqueous composition of the present invention will be described.

The aqueous composition of the present invention is prepared to dissolve a ferrosoferric salt of a general formula (A) in water *ie* by the addition of an aqueous solution to a ferrosoferric salt or the addition of a ferrosoferric salt to an aqueous solution and further to dilute the solution with the above aqueous solution such as distilled water.

The usual manner to dissolve such as stirring and heating is conducted in case dissolution does not easily proceeded depended on the kind of the aqueous solvent although the ferrosoferric salt of the present invention is soluble with water. Filtration can be preferably conducted to get suitable aqueous solution in case precipitation derived from impurities of the solvent is carried out.

The aqueous composition comprising a ferrosoferric salt is fallen into the scope of the claims of the present invention, as long as the ferrosoferric salt is dissolved in the solution, since the effectiveness of the composition does not depend on the density of the ferrosoferric salt. The density of the ferrosoferric salt of the aqueous composition to use is preferably 10⁻¹ to 10⁻⁷g/ml, more preferably 10⁻³ to 10⁻⁵g/ml.

Next, the ferrosoferric salt of a general formula (A) :

Fe(II)ₘ Fe(III)ₙ Y^{-Z} _{(2m+3n)/Z}

(wherein each of m and n is a positive integer, Y is a counter anion for a ferrous and a ferric cation and Z is an ionic value of Y) as an active ingredient of the aqueous composition of the present invention will be mentioned.

As examples of Y in a general formula (A) is mentioned an inorganic anion such as chloro ion (Cl⁻), sulfonic acid ion (SO₄²⁻) and nitric acid ion (NO₃⁻) or organic anion such as a formic acid ion (CHOO⁻), an acetic acid ion (CH₃COO⁻), an oxalic acid ion (HOOCCOO⁻), a succinic acid ion (HOOCCH₂CH₂COO⁻), a malic acid ion (HOOCCH₂CH(OH)COO⁻, -OOCCH₂CH(OH)COO⁻), a tartric acid ion (HOOCCH(OH)CH(OH)COO⁻), a fumaric acid ion (HOOCCH=CHCOO⁻) and a citric acid ion (C₃H₄(OH)(COOH)₂(COO⁻)).

The ratio of m/n is specified by the species of bivalent metal salt using in the first method or prescribed dilution density in the second method. Particularly, the ratio of m/n are referred to be 2/3,1/1, 3/2, 2/1 and 7/3.

Now, the process for the preparation of the ferrosoferric salts will be described in detail with reference to the preferred embodiments. The ferrous and the ferric salt are prepared by the first and the second method.

As for a trivalent iron salt for the preparation of the ferrous and the ferric salt, known iron salts such as FeCl₃, Fe₂(SO₄)₃, Fe(NO₃)₃ and the solvate thereof are mentioned.

As for a bivalent metal salt for the preparation, for example, CaCl₂, MgCl₂, ZnCl₂,MgSO₄, Ca(NO₃)₂, Mg(NO₃)₂ and Zn(NO₃)₂ are preferably mentioned.

As for an organic acid to be used for the preparation,, for example,formic acid, acetic acid, oxalic acid, succinic acid, malic acid, tartric acid, fumaric acid and citric acid are preferably mentioned.

The ferrosoferric salt of the present invention may be prepared by the dissolution of a trivalent iron salt into an aqueous solution having a trivalent iron salt and a bivalent metal salt in prescribed concentration and the concentration of the obtained solution (Method 1).

The ferrosoferric salt of the present invention may also be prepared by the dissolution of a trivalent iron salt into an aqueous solution having a trivalent iron salt and an organic acid in ranging in prescribed concentration and presenting prescribed electric conductivity, and the concentration of the obtained solution (Method 2).

To put into the further concrete explanation of Method 1, the first step of the method is to prepare an aqueous solution comprising a trivalent iron salt and an organic acid in ranging in prescribed concentration rate such as the same equivalent molar rate. After the aqueous solution is diluted with distilled water to give a second aqueous solution including a trivalent iron salt and an organic acid as prescribed concentration (∼10⁻¹⁰mM), a trivalent iron salt was secondly solved in addition to the second aqueous solution. The solution thus obtained is concentrated under 100°C to give the objective ferrosoferric salt.

As for the further concrete explanation of Method 2, the first step of the method is to prepare an aqueous solution comprising a trivalent iron salt and an organic acid in prescribed rate (for example a trivalent iron salt / an organic acid = 1/2 (per mole)). The aqueous solution is subsequently diluted ten times with distilled water to give a series of a diluted aqueous solution (concentration: 10⁻⁴∼10⁻²⁰mM ). Electric conductivity of each diluted solution is measured, solutions having more than 3µs/cm value as a maximum electric conductivity are selected. A trivalent iron salt is added to a selected solution or the mixture of one or more selected solution, and the solution thus obtained is concentrated under 100°C to give the objective ferrosoferric salt.

The results of the existing state of the crystalline powder of the ferrosoferric salt measured by ion chromatography and X-ray crystal structure analysis support the fact that the ferrosoferric salt exists not as a mixture but as a single compound.

The aqueous composition comprising a ferrosoferric salt prepared by Method 1 or Method 2, may be used for a rust preventive agent for metals, an elimination agent for salt hindrance, an improvement agent for soil having obstacles by the continuous crop, a storage agent for a tissue of a bioorganisms, a restored agent for a plant tissue, a non-biologically synthetic agent for a bioorganisms component, an antiseptic agent of plants, an anti-mold agent and an anti-virus agent.

Now, tests for an antitrust ability, an ability of surmountment of salt obstacles of plants, an ability of improvement of soil having obstacles by the continuous crop, an ability of restorage for a bioorganisms tissue, an ability of revival of a plant tissue, an ability of inorganic synthesis of a bioorganisms component, an ability of aseptic and prevention of mold and an anti-virus ability are conducted to demonstrate the usefulness of the aqueous composition of the present invention.

### Test 1: An antitrust ability

After an iron plate (0.2cmx5cmx5cm) was previously washed with aqueous diluted HCI and distilled water and dried over, the iron plate was saturated with aqueous composition of Ex.1, and stand for 30 minutes at 80 °C. As a reference, the iron plate was soakked in distilled water, and stand for 30 minutes at 80 °C. Both iron plates were left under HCI gas steam, the surface of the iron plate was observed. The reference iron plate had remarkable trust after 1 hour from the beginning of the test, whereas the iron plate treated with aqueous composition of Ex.1 had no trust even after 6 days from the beginning. From the above result that the iron plate treated with aqueous composition of the present invention had no trust even under severe HCI atmosphere, the aqueous composition of the present invention showed a ability for a rust preventive agent for metals,

### Test 2: Elimination for salt hindrance

The addition of the aqueous composition of the present invention to the natural sea water afforded the test solution whose concentration of a ferrosoferric salt is around 10⁻⁴g/ml. Iron powder, magnesium powder and copper powder were added to the test solution and sea water as a reference. While chlorides of all the metals were produced in a day in the reference sea water with no treatment, there were no chlorides in the test solution. Form the above result, there were no salt hindrance in the test solution, and the powdery metal existed stable.

### Test 3: Improvement for soil having obstacles by the continuous crop

To soil having difficult-to-treat obstacles by breeding of *fusarium* species in cultivation land for Japanese radishes, was added aqueous composition of Example 3 as the soil was moistened with the aqueous composition. The radishes were planted with ordinary manner. At the result all of the radishes were grown to achieve 240 ratio yield versus 100 ratio yield of the reference. From the above result, the aqueous composition of the present invention improved hindrance soil and can lead the plant to proper growth.

### Test 4: Restored for an animal tissue

Fresh muscle tissue cut out from a white mouse which had been just killed was put into a bottle and the aqueous composition of Example 2 was added thereto. The bottle was stopped up with enclosing air and settled gently at room temperature.
From the result, the muscle tissue of the reference was broken down after a weak from the start of the test, while the muscle tissue of the test in the aqueous composition of the present invention was not broken down. Microbes were not breeding and the solution was clear and retained with the state of the bottled time. From the above result, the aqueous composition of the present invention could store the living tissue stably.

### Test 5: Revival of a plant tissue

Twigs of a black pain were steeped in aqueous composition of Ex.3 and distilled water (reference) for 30 minutes, and the twigs were each put in quarts sand in a pot. Although all the twigs of the reference were withered, the twigs treated with the composition were sprightly taken root. From the above result, the aqueous composition of the present invention may remarkably revive a cut end of a plant tissue, and grow the plant.

### Test 6: Aseptic and prevention of mold

Shucked clams and pieces of rice cake were previously let alone at 32°C for 3 days in open system and microorganisms were bred therein. To 10ml of aqueous composition of Ex. 1 in a test tube was added the grown microorganism together with each of 0.5g of rice powder and peptone and still stand for 3 days at 32 °C.
To 100ml of distilled water was added 0.1ml of the obtained suspension to prepare the solution for test. Fresh shucked clams and pieces of rice cake were preserved in the test solution of a sealed bottle at room temperature. The reference test was conducted to use distilled water in stead of the aqueous composition as a test solution. Although putrefaction and molds existed in a reference, multiplication of microorganisms did not occurred in the test system treated with the aqueous composition. From the result, the aqueous composition of the present invention had remarkable ability of aseptic and prevention of mold.

### Test 7: anti-virus ability

After TMV was inoculated to a leaf of a tomato plant as a host plant and was propagated in vivo, TMV suspension for test was prepared to dilute squeezed solution from the leaf 500 times with distilled water just before the test.
After the leaf of tobacco plant grown for a month was applied with Carborundum™, the half part of the test leaf was applied with the TMV suspension diluted with distilled water two times by using cotton. The test TMV suspension was prepared by using aqueous composition of Ex.1. After the leaf was dried, the rest of Carborundum™ was washed with water, the leaf was grown **in Koitotolon**™ at 26°C. The number of spots of the leaf tested and inhibition rate of the test composition was measured.
The result was shown in Table1.

**(Table 1)**

| | Reference | Test | Inhibition rate |
|---|---|---|---|
| Number of spots (1) | 125 | 0 | |
| Number of spots (2) | 179 | 6 | |
| Number of spots (3) | 66 | 3 | |
| Average | 128.3 | 3 | 97.6% |

From the above result, the aqueous composition of the present invention had an anti-virus ability.

Now, antitrust tests for metals were conducted in various concentration of a ferrosoferric salt of Reference Ex. 1 of the present invention and iron chloride (II, III) disclosed in Japanese Patent Publication of 190226/1984 in comparison with a non-treatment test.

### Test. 8

After an iron plate (0.2cmx5cmx5cm) was previously washed with aqueous diluted HCI and distilled water and dried over, prescribed test solution (200ml) including a ferrosoferric salt of Reference Ex. 1 of the present invention, iron chloride (II, III) disclosed in Japanese Patent Publication of 190226/1984, hydrogen fluoride (1.2x10⁻⁴g/ml) and glucose (1.0x10⁻³g/ml) were prepared. The iron plate was saturated with the above test solution, and stand for 30 minutes at 80 °C. Iron plates tested were left under HCI gas steam, the surface of the iron plate was observed. The result were shown in Table 2.

**Table 2**

| (+: corrosion; -: none-corrosion) | | | |
|---|---|---|---|
| Test compound | concentration of a ferrosoferric salt of test solution (g/ml) | the corrosion state of the surface after 1 hour | the corrosion state of the surface after 6 days |
| reference (none-treatment) | 0 | + | + |
| Compound of REFERENCE EXAMPLE 1 of the present application | 2.5 × 10⁻¹ | - | - |
| | 2.5 × 10⁻³ | - | - |
| | 2.5 × 10⁻⁵ | - | - |
| | 2.5 × 10⁻⁷ | - | - |
| iron chloride (II, III) carrying sodium chloride) | 2.5 × 10⁻¹ | + | + |
| | 2.5 × 10⁻³ | - | - |
| | 2.5 × 10⁻⁵ | + | + |
| | 2.5 × 10⁻⁷ | + | + |

The reference iron plate had remarkable trust after 1 hour from the beginning of the test, whereas corrosion did not proceed on the iron plate treated with aqueous composition having a ferrosoferric salt. Provided that the aqueous composition of the present invention showed antitrust effect in every concentration of the salt, and the aqueous composition comprising iron chloride, disclosing Japanese patent publication of 190226/1984, derived from iron chloride II showed antitrust effect in a specific concentration.

### EXAMPLES AND REFERENCE EXAMPLES

The following examples illustrate the present invention more specifically. It should be understood that the present invention is not limited to those examples alone.

### EXAMPLE 1

100mg of the compound of Reference example 5 was dissolved in 10 L of distilled water (pH 6.5) at room temperature, and the obtained solution was diluted 100 times using the above distilled solution to afford the objective aqueous composition.

### EXAMPLE 2

100mg of the compound of Reference example 2 was dissolved in 10 L of distilled water (pH 6.0) at room temperature, and the obtained solution was diluted 1000 times using the above distilled solution to afford the objective aqueous composition.

### EXAMPLE 3

100mg of the compound of Reference example 1 was dissolved in 10 L of distilled water (pH 5.5) at room temperature, and the obtained solution was diluted 1000 times using the above distilled solution to afford the objective aqueous composition.

### (Reference Examples)

### REFERENCE EXAMPLE 1

In 100ml of aqueous solution (10mM) of CaCl₂ was dissolved 270mg of FeCl₃ · 6H₂O, and the resulting solution was diluted with distilled water to afford a diluted solution (concentration of the salts: 10⁻¹⁰mM). To 20ml of the above diluted solution was added 1g of crystalline FeCl₃ · 6H₂O and the solution was gradually concentrated in a porcelain dish over a boiling water bath. The obtained solid concentrate was dried over P₂O₅ in a desiccator. The ratio of Fe(II) and Fe(III) was measured by Mössbauer spectroscopy analysis was 2/3. The formula of the main component of the compound thus obtained *ie* Fe(II)₂Fe(III)₃Cl₁₃ was determined.

### REFERENCE EXAMPLE 2

In 100ml of aqueous solution (10mM) of ZnCl₂ was dissolved 270mg of FeCl₃ · 6H₂O, and the resulting solution was diluted with distilled water to afford a diluted solution (concentration of the salts: 10⁻¹⁰mM). To 20ml of the above diluted solution was added 1 g of crystalline FeCl₃ · 6H₂O and the solution was gradually concentrated in a porcelain dish over a boiling water bath. The obtained solid concentrate was dried over P₂O₅ in a desiccator. The ratio of Fe(II) and Fe(lll) was measured by Mössbauer spectroscopy analysis was 3/2. The formula of the main component of the compound thus obtained *ie* Fe(II)₃Fe(III)₂Cl₁₂ was determined.

### REFERENCE EXAMPLE 3

In 100ml of aqueous solution (20mM) of NH₄CHO₂ was dissolved 270mg of FeCl₃ · 6H₂O, and the resulting solution was subsequently diluted with distilled water to afford various concentration of diluted solutions. An electric conductivity of each diluted solution was measured to find the solution having a maximum electric conductivity of 14µs/cm (concentration of the salts: 10⁻¹⁴mM). To the solution was added 1 g of crystalline FeCl₃ · 6H₂O and the solution was gradually concentrated in a porcelain dish over a boiling water bath. The obtained solid concentrate was dried over P₂O₅ in a desiccator.The ratio of Fe(II) and Fe(III) was measured by Mössbauer spectroscopy analysis was 7/3. The formula of the main component of the compound thus obtained *ie* Fe(II)₇Fe(III)₃Cl₂₃ was determined.

### REFERENCE EXAMPLE 4

Fe(II)₂Fe(III)₃Cl₁₃ obtained in REFERENCE Ex. 1 was dissolved in water to prepare a diluted solution whose concentration of iron salts was 1 ppm (Solution 1). As the same manner, Fe(II)₇Fe(III)₃Cl₂₃ obtained in REFERENCE Ex. 3 was dissolved in water to prepare a diluted solution whose concentration of iron salts was 1ppm (Solution 2). 10ml of Solution 1 and 2.5 ml of Solution 2 were mixed, and the mixture was diluted with distilled water to prepare a diluted solution (concentration of the iron: 10⁻⁸ppm). In 20ml of the resulting diluted solution was dissolved 1g of crystalline FeCl₃ · 6H₂O, and the solution was gradually concentrated in a porcelain dish over a boiling water bath. The obtained solid concentrate was dried over P₂O₅ in a desiccator. The ratio of Fe(II) and Fe(III) was measured by Mössbauer spectroscopy analysis was 1/1. The formula of the main component of the compound thus obtained *ie* Fe(II)Fe(III)Cl₅ was determined.

### REFERENCE EXAMPLE 5

Fe(II)₂Fe(III)₃Cl₁₃ obtained in REFERENCE Ex. 1 was dissolved in water to prepare a diluted solution whose concentration of iron salts was 1 ppm (Solution 1). As the same manner, Fe(II)₇Fe(III)₃Cl₂₃ obtained in REFERENCE Ex. 3 was independently dissolved in water to prepare a diluted solution whose concentration of iron salts was 1 ppm (Solution 2). 3.0ml of Solution 1 and 12.0 ml of Solution 2 were mixed, and the mixture was diluted with distilled water to prepare a diluted solution (concentration of the iron: 10⁻⁸ppm). In 20ml of the resulting diluted solution was dissolved 1g of crystalline FeCl₃ · 6H₂O, and the solution was gradually concentrated in a porcelain dish over a boiling water bath. The obtained solid concentrate was dried over P₂O₅ in a desiccator. The ratio of Fe(II) and Fe(III) was measured by Mössbauer spectroscopy analysis was 2/1. The formula of the main component of the compound thus obtained *ie* Fe(II)₂Fe(III)Cl₇ was determined.

### REFERENCE EXAMPLE 6

An aqueous solution comprising NH₄CHO₂ (2M), NH₂OH · HCl (1M) and HCHO (1 M) was prepared, and FeCl₃ · 6H₂O (1 M) was added thereto, and the resulting solution was subsequently diluted with distilled water to afford various concentration of diluted solutions. An electric conductivity of each diluted solution was measured to find the solution having a maximum electric conductivity of 3-14 µs/cm (concentration of the salts: 10⁻⁸ mM 10⁻¹²mM and 10⁻¹⁴mM). To 10 ml of each solution[10⁻⁸mM (herein after preferred to α solution), 10⁻¹²mM (herein after preferred to β solution)and 10⁻¹⁴mM, (herein after preferred to γ solution) ] was added 1 g of crystalline FeCl₃ · 6H₂O and the solution was gradually concentrated in a porcelain dish less than 100°C. The obtained solid concentrate was dried in a desiccator to afford crystalline powder. The ratio of Fe(II) and Fe(III) was measured by Mössbauer spectroscopy analysis was as follows:
(1) a crystal derived from α solution: the ratio of Fe(II) and Fe(III) = 2/3, and consequently, the formula of the main component of the compound thus obtained *ie* Fe(II)₂Fe(III)₃Cl₁₃ was determined.
(2) a crystal derived from β solution: the ratio of Fe(II) and Fe(III) = 3/2, and consequently, the formula of the main component of the compound thus obtained *ie* Fe(II)₃Fe(III)₂Cl₁₂ was determined.
(3) a crystal derived from γ solution: the ratio of Fe(II) and Fe(III) = 7/3, and consequently, the formula of the main component of the compound thus obtained *ie* Fe(II)₇Fe(III)₃Cl₂₃ was determined.

### INDUSTRIAL APPLICABILITY

This invention relates to novel aqueous composition and useful for a rust preventive agent for metals which is independent on the concentration of a ferrosoferric salt.

## Claims

1. An aqueous composition comprising a ferrosoferric salt of the general formula (A) :
Fe(II)ₘ Fe(III)ₙ Y^{-Z} _{(2m+3n)/Z}
(wherein each of m and n is a positive integer, Y is a counter anion for a ferrous and a ferric cation and Z is an ionic value of Y)

2. A rust preventive agent for metals comprising an effective amount of the aqueous composition in Claim 1.
